# EUROPEAN PATENT APPLICATION

(11) **EP 3 441 960 A1**
(43) Date of publication of application: **13.02.2019**
(21) Application number: 17778568.0
(22) Date of filing: 07.03.2017
(51) Int. Cl.: G08G 1/0967, G08G 1/16

(54) **INTELLIGENT LIGHTING SYSTEM, INTELLIGENT VEHICLE AND AUXILIARY VEHICLE DRIVING SYSTEM AND METHOD THEREFOR**

(30) Priority: 07.04.2016 CN 201610213934; 08.04.2016 CN 201610214685
(71) Applicant: Shanghai Sansi Electronic Engineering Co., Ltd, Shanghai 201100 (CN); Shanghai Sansi Technology Co. Ltd., Nanhui New City, Shanghai 200030 (CN); Sansi Optoelectronics Technology (Shanghai) Co., Ltd, Nanhui New City, Shanghai 200030 (CN); Jiashan Sansi Optoelectronic Technology Co., Ltd., Zhejiang 314113 (CN)
(72) Inventor: JIANG, Yuxi, Shanghai 201100 (CN); ZHOU, Fan, Shanghai 201100 (CN); QING, Pei, Shanghai 201100 (CN); SHUAI, Yinghong, Shanghai 201100 (CN)
(74) Representative: Garcia González, Sergio
(86) International application number: PCT/CN2017/075834
(87) International publication number: WO 2017/173904

(57) **Abstract**

The present invention provides an intelligent lighting system, an intelligent vehicle, and an auxiliary vehicle driving system and method thereof. The intelligent lighting system communicates with the vehicle to transmit road condition information data to the vehicle for navigation and/or autonomous driving. In the technical solution of the present invention, lighting equipments are used to collect the road condition information data to the vehicle, to resolve a problem that an intelligent vehicle sensor system has a "visual blind area", thereby greatly improving navigation accuracy and safety of the intelligent vehicle.

## Description

### Background of the Present Invention

### Field of Invention

The present invention relates to the technical field of network, and in particular, to an intelligent lighting system, an intelligent vehicle, and an auxiliary vehicle driving system and method thereof.

### Description of Related Arts

Automatic driving of an intelligent vehicle belongs to a popular technical field which has developed rapidly in recent years. An automatic driving technology relates to a power system, a sensor system, a control system, a computer system, and a peripheral device of the vehicle. A main technical implementation means is detecting road condition information around the vehicle by using the sensor system of the vehicle, and processing the road condition systems by using the computer system, to implement a function of automatic or auxiliary driving of the vehicle. Wherein, road condition data is from the sensor system, map and positioning information are from satellite positioning data, and with the development of sensor technology and the improvement of computer computing capability, automatic driving has already entered an experimental stage from a laboratory stage. However, such data sources and a processing manner have the following problems.
(1) Collecting the road condition data based on an in-vehicle sensing system has a blind area and a visual limitation. To be specific, current sensing units such as a laser ranging device, a camera device, an in-vehicle radar device and the like cannot bypass obstacles to clearly sense road condition data of blocked areas. In this way, road conditions within the blocked areas are "visual blind areas" for the computer system of the vehicle.
(2) The vehicle is in a motion state. Because of a limitation of the sensor technology, processing and assurance of accuracy of the collected data are more difficult, and there is no external data for reference and correction.
(3)For a satellite positioning system, in some particular cases, for example, in a tunnel, communication may be interrupted or a signal is not good. This also generates a limitation to an approximate case of automatic driving.

This is a quite large test for computing and processing capabilities of the computer system, the computer system needs to respond in time when new data appears, and the computer system is required to have a shorter response time and a higher computing speed. An accident is quite easy to occur in a case of a complex road condition in reality, which is a great threat to safety of the intelligent vehicle.

### Summary of the Present Invention

In view of the above disadvantages of the prior art, an object of the present invention is to provide an intelligent lighting system, an intelligent vehicle, and an auxiliary vehicle driving system and method thereof, to resolve a problem in the prior art that a blind spot of an in-vehicle device leads to inaccuracy of road condition determining and easily causes danger.

To achieve the foregoing object or other objects, the present invention provides an intelligent equipment, a plurality of lighting equipments disposed along a road, wherein each of the plurality of lighting equipments is provided with a sensing unit, which is configured to collect road condition information data within a detection range of the sensing unit; and a communication system, in communication connection with the sensing units, and configured to provide the collected road condition information data to an intelligent vehicle.

In an embodiment of the present invention, detection ranges of the plurality of lighting equipments partially overlap with each other; and/or communication coverage ranges of the plurality of lighting equipments partially overlap with each other.

In an embodiment of the present invention, the intelligent lighting system further comprises a preprocessing unit, configured to preprocess the road condition information data and send the preprocessed road condition information data out by using the communication system.

In an embodiment of the present invention, the preprocessing unit comprises processing modules distributively disposed on the plurality of lighting equipments in the communication system, and the processing modules preprocess road condition data collected by the lighting equipments within an area.

In an embodiment of the present invention, the preprocessing unit is disposed at a cloud end at which a network is connected to the communication system.

In an embodiment of the present invention, a manner of the preprocessing comprises one or more of the following: defining of a collision boundary and/or a collision volume of a vehicle, a pedestrian or another obstacle; determining of a motion state of the vehicle, the pedestrian or the another obstacle; and 3D modeling of the vehicle, the pedestrian or the another obstacle.

In an embodiment of the present invention, the communication system comprises communication units disposed on the plurality of lighting equipments, and is in communication connection with the intelligent vehicle through an external communication network, or is in direct communication connection with the intelligent vehicle.

In an embodiment of the present invention, the communication system is further in communication connection with a cloud end through an external network to upload the road condition information data.

To achieve the foregoing object or the other objects, the present invention provides a lighting equipment configured to establish the foregoing road lighting network, comprising a lighting unit, a sensing unit, and a communication unit, wherein the sensing unit is configured to collect road condition information within a detection range of the sensing unit; and the communication unit is configured to form a communication system of a road lighting network, and transmit road condition information data collected by a sensor out.

To achieve the foregoing object or the other objects, the present invention provides an intelligent vehicle, comprising a vehicle power system, a vehicle control system, an in-vehicle sensor system, and an in-vehicle terminal, wherein the in-vehicle terminal comprises a processing module and a communication module; the communication module is configured to receive first road condition information data from an intelligent lighting system and second road condition information data from the in-vehicle sensor system; the processing module is connected to the communication module, and is configured to: process the first road condition information data and the second road condition information data to form complete road condition data, generate a vehicle control instruction based on the complete road condition data, and send the vehicle control instruction to the vehicle power system and the vehicle control system of the vehicle to implement automatic driving; and/or the in-vehicle terminal generates navigation information based on the complete road condition data and displays the navigation information.

In an embodiment of the present invention, the in-vehicle terminal further comprises a display module; and the processing module is connected to the display module, and is further configured to process road condition information data into the navigation information and display the navigation information by using the display module.

To achieve the foregoing object or the other objects, the present invention provides an in-vehicle terminal, comprising a communication module, configured to receive first road condition information data from an intelligent lighting system and second road condition information data from an in-vehicle sensor system; a processing module, connected to the communication module, and configured to process the first road condition information data and the second road condition information data to form complete road condition data, and generate, based on the complete road condition data, a vehicle control instruction used for being sent to a vehicle power system and a vehicle control system of an intelligent vehicle to implement autonomous driving; and/or the in-vehicle terminal generates navigation information based on the complete road condition data and displays the navigation information.

In an embodiment of the present invention, the in-vehicle terminal further comprises a display module; and the processing module is connected to the display module, and is further configured to process road condition information data into the navigation information and display the navigation information by using the display module.

To achieve the foregoing object or the other objects, the present invention provides an auxiliary vehicle driving system, comprising the intelligent lighting system and the intelligent vehicle.

To achieve the foregoing object or the other objects, the present invention provides an auxiliary vehicle driving method, applied to the auxiliary vehicle driving system. The method comprises: sending collected first road condition data by an intelligent lighting system; receiving the first road condition data by an in-vehicle terminal located in a vehicle, and acquiring second road condition data collected by an in-vehicle sensor system; fusing the first road condition data with the second road condition data to form complete road condition data by the in-vehicle terminal; and generating, by the in-vehicle terminal, a vehicle control instruction based on the complete road condition data and sending the vehicle control instruction to a vehicle power system and a vehicle control system of the vehicle to implement automatic driving; and/or generating navigation information based on the complete road condition data and displaying the navigation information by the in-vehicle terminal.

In an embodiment of the present invention, the intelligent lighting system starts to collect road condition information data within a road section after it is monitored that the intelligent vehicle accesses a network or drives into a communication coverage area.

In an embodiment of the present invention, the intelligent lighting system starts to collect road condition information data within a road section after it is monitored that the intelligent vehicle accesses a network or drives into a communication coverage area.

In an embodiment of the present invention, the method comprises: preprocessing, by the intelligent lighting system, road condition information data and sending the preprocessed road condition information data out by using a communication system.

In an embodiment of the present invention, a manner of the preprocessing comprises one or more of the following: defining of a collision boundary and/or a collision volume of a vehicle, a pedestrian or another obstacle; determining of a motion state of the vehicle, the pedestrian or the another obstacle; and 3D modeling of the vehicle, the pedestrian or the another obstacle.

As described above, the present invention provides the intelligent lighting system, the intelligent vehicle, and the auxiliary vehicle driving system and method thereof. The intelligent lighting system communicates with the vehicle to transmit the road condition information data to the vehicle for navigation and/or automatic driving. In the technical solution of the present invention, the lighting equipments are used to collect the road condition information data to the vehicle, to resolve a problem that an intelligent vehicle sensor system has a "visual blind area", thereby greatly improving navigation accuracy and safety of the intelligent vehicle.

### Brief Description of the Drawings

Fig. 1 is a schematic diagram showing a road scenario applied in an embodiment of the present invention.
Fig. 2A is a schematic principle diagram of a detection range of an intelligent vehicle in a road scenario in the prior art.
Fig. 2B to Fig. 2C are schematic principle diagrams showing effects obtained in a plurality of road scenarios according to the present invention.
Fig. 3 is a schematic structural diagram of a lighting equipment according to an embodiment of the present invention.
Fig. 4A to Fig. 4C are schematic structural diagrams of an intelligent vehicle according to a plurality of embodiments of the present invention.
Fig. 5 is schematic flow chart of an auxiliary vehicle driving method according to an embodiment of the present invention.

### Description of reference numerals:

- 100: Lighting equipment;
- 300: Lighting equipment;
- 301: Sensing unit;
- 302: Communication unit;
- 303: Lighting unit;
- 400, 410, and 420: Intelligent vehicles;
- 401, 411, and 421: In-vehicle terminals;
- 402, 412, and 422: Communication modules;
- 403, 413, and 423: Processing modules;
- 414: Display module;
- 424: Vehicle power system; and
- 425: Vehicle control system.

### Detailed Description of the Preferred Embodiments

The implementation mode of the present invention will be described below in through specific embodiments. One skilled in the art can easily understand other advantages and effects of the present invention according to contents disclosed by the description. The present invention can also be implemented or applied through other different specific implementation modes. Various modifications or changes can also be made to all details in the description based on different points of view and applications without departing from the spirit of the present invention. It needs to be stated that the following embodiments and the features in the embodiments can be combined with one another under the situation of no conflict.

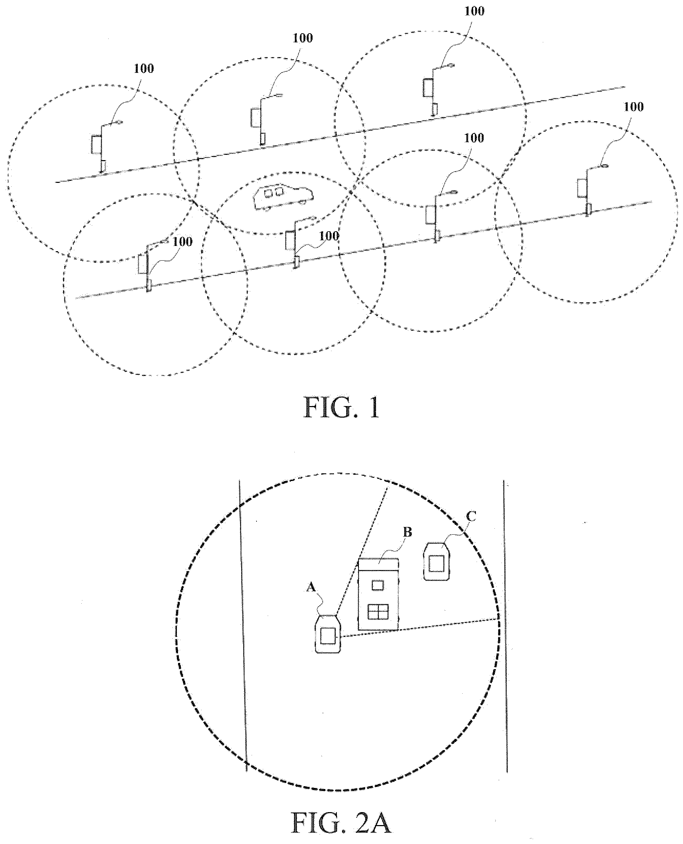

It needs to be stated that the drawings provided in the following embodiments are just used for schematically describing the basic concept of the present invention, thus only illustrate components only related to the present invention and are not drawn according to the numbers, shapes and sizes of components during actual implementation, the configuration, number and scale of each component during actual implementation thereof may be freely changed, and the component layout configuration thereof may be more complex. Fig. 1 shows a schematic principle diagram of an intelligent lighting system in a road scenario according to an embodiment of the present invention. The intelligent lighting system in the present application is used for auxiliary driving (navigation and automatic driving) of an intelligent vehicle. It should be explained that navigation mentioned herein refers to presentation of a real-time road condition and guiding of driving in a small range, and automatic driving comprises entirely automatic driving (unmanned driving) and semi-automatic driving (automatic implementation of certain driving functions).

The intelligent lighting system specifically comprises the following parts: a plurality of lighting equipments 100 disposed along a road and a communication system.

The lighting equipments 100 may be lighting equipments such as street lamps, tunnel lamps, and guardrail lamps, and are generally distributed on both sides and the middle of the road and the top or both sides of a tunnel. Each of the plurality of lighting equipments 100 is provided with a sensing unit. Detection ranges of the sensing units cover certain road area as shown in dashed circles in the figure, and the sensing units are configured to collect road condition information data within the detection ranges thereof. The sensing unit comprises one or more of an infrared sensor, a camera, and a radar sensor. Road condition information refers to a road condition affecting driving, for example, a number of vehicles driving on the road, positions of the vehicles, speeds of the vehicles, positions of pedestrians, or positions of obstacles. An image or digital data that comprises at least one type of road condition information is formed by using the sensing units.

To ensure data collected by the intelligent lighting system to be more comprehensive and accurate, the detection ranges of the sensing units of the lighting equipments 100 need to entirely cover road areas and both sides of the road areas. Preferably, a part or the entire of a same area on the road is covered by a plurality of lighting equipments. The communication system is used for providing the collected road condition information data to a computer system of the intelligent vehicle. In this way, real-time road information data can be transmitted to the vehicle, so that complete road condition data of "non-blind area" is formed, and road condition data of the same area collected by an in-vehicle sensor can be corrected with reference to the data.

The communication system is a set of various communication apparatuses or components through which the plurality of lighting equipments communicate with the outside in a wired or wireless manner to transmit the collected road condition information data.

Referring to Fig. 2A to Fig. 2C, a technical effect produced by application of a technical solution of the present invention is described by using specific scenarios.

Fig. 2A shows a road scenario in the prior art. An intelligent vehicle A cannot learn of a road condition of an area on the right side of a vehicle B due to blocking of the vehicle B. That is, a "blind area" appears. Therefore, the intelligent vehicle A cannot learn of existence of a vehicle C. In this case, if B suddenly changes a lane to drive in front of the intelligent vehicle A, A in an automatic driving state may not react in time.

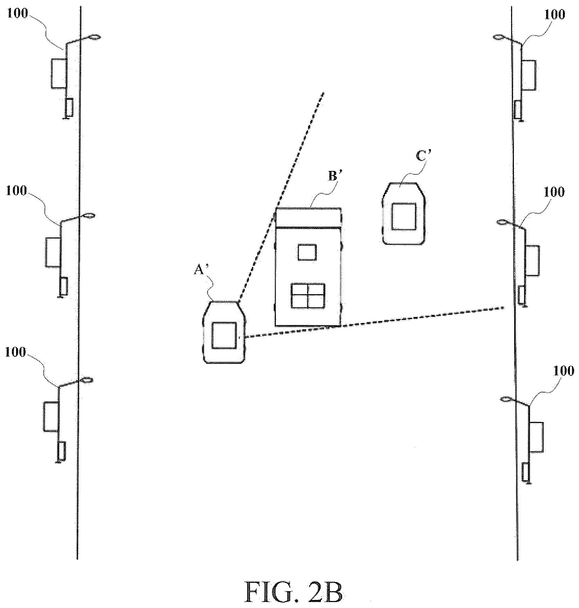

Fig. 2B shows a road scenario to which the intelligent lighting system consistent with the present invention is applied in a same case. In this scenario, an intelligent vehicle A' may acquire road condition information data by using a lighting equipment whose detection range covers an area on the right side of B' in the intelligent lighting system, thereby learning of a motion condition of a vehicle C' and eliminating a "blind area", and A' can prepare in advance and avoids the problem in the embodiment of Fig. 2A.

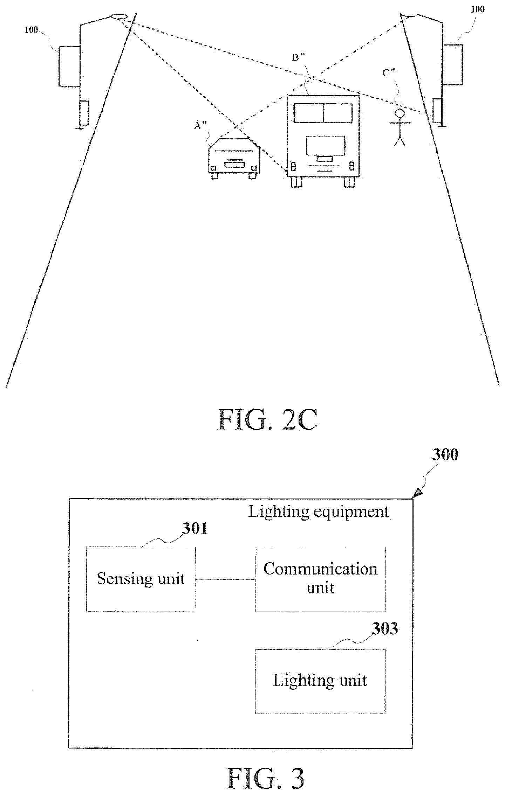

Fig. 2C shows a road scenario to which the intelligent lighting system consistent with the present invention is applied in a same case and a beneficial effect of an embodiment in which a same area is covered by a plurality of lighting equipments. In this scenario, a lighting equipment disposed on a single side may appear a "blind area" in some cases (it should be noted that the figure uses an exaggerated proportion to describe the principle and the effect, a difference between heights of a lamp pole and a vehicle during actual implementation is far greater than the proportion of the figure, therefore, a "blind area" actually generated is quite small and does not affect the embodiment of a single lamp to achieve the invention object of the present application), and when the same area is covered by the plurality of lighting equipments, by means of mutual supplement of road condition information of the plurality of lighting equipments, detection ranges in the intelligent lighting system cover areas on both sides of B', so that motion states of a pedestrian C' and a vehicle A' that are blocked by B' can be learned of, and the "blind area" is eliminated. The intelligent vehicle can acquire detailed road condition data at a distant position, thereby preparing in advance, and avoiding the problem in the embodiment of Fig. 2C.

To implement the foregoing technical contents, the following describes implementation of devices in the present invention by using a plurality of embodiments.

Fig. 3 shows a schematic diagram of a module structure of a lighting equipment 300 according to an embodiment. The lighting equipment 300 comprises a sensing unit 301 and a communication unit 302. Certainly, the lighting equipment 300 further comprises a lighting unit 303, and the lighting unit 303 comprises, for example, an LED light source a drive power source and the like. Further descriptions are omitted herein.

The communication unit 302 is connected to the sensing unit 301 and is configured to send the road condition information data out. The communication unit 302 may be a wired or wireless communication module, and preferably, is a wireless communication module, for example, one or more of a radio frequency module, a WiFi module, a Zigbee module and the like, thereby sending the road condition information data out.

In an embodiment, the communication system comprises the communication units 302 disposed on the plurality of lighting equipments, and is in indirect communication connection with the intelligent vehicle through an external communication network (for example, a mobile communication network or other networks), or is in direct communication connection with the intelligent vehicle. Certainly, in other embodiments, the plurality of lighting equipments 300 do not necessarily need to be disposed with the communication units 302, instead are in communication connection with the sensing units 301 by using a communication system comprising one or more communication devices/components except for the lighting equipments 300, to collect the collected road condition information data.

It should be noted that in the present embodiment, the plurality of lighting equipments 300 may not communicate with each other, and directly transmit the collected road condition information data to the intelligent vehicle within the ranges. Compared with other preferred embodiments, the present implementation mode has a relatively high requirement on a processing capability and a communication device of the intelligent vehicle. If preprocessing needs to be performed, costs of a layout of the intelligent lighting system is also relatively high. Preferably, the lighting equipments 300 may serve as wireless nodes to establish a sensing network, thereby satisfying requirements of some applications, such as positioning and the like. In another embodiment of the present application, alternatively, the communication units 302 on the lighting equipments 300 may be in communication connection with the external communication network, the road condition information data is first transmitted to the external communication network, and then is transmitted to the intelligent vehicle from the external network. Specifically, the lighting equipment comprises a light fixture body, or a light fixture body and peripheral equipments such as a mounting support and a pole support of the light fixture body. That the sensing unit is disposed on the lighting equipment may be that the sensing unit is structurally and/or electrically connected to the lighting equipment. For example, a sensor unit body is connected to the light fixture body and the support, or a sensor unit is mounted at a periphery of the lighting equipment, and is connected to the lighting equipment electrically and through a network. Disposing manners of functional modules such as a communication apparatus and a preprocessing unit mentioned hereafter may be the same as the disposing manner of the sensing unit. In a preferred implementation mode, a mounting and combination manner of a related device and a module in associated applications (for example, Chinese Patent Application No. 201510960362.X, No. 201610128737.0 and No. 2016220202236.8) of the applicant may be used. An implementation mode of a specific structure is not described herein again.

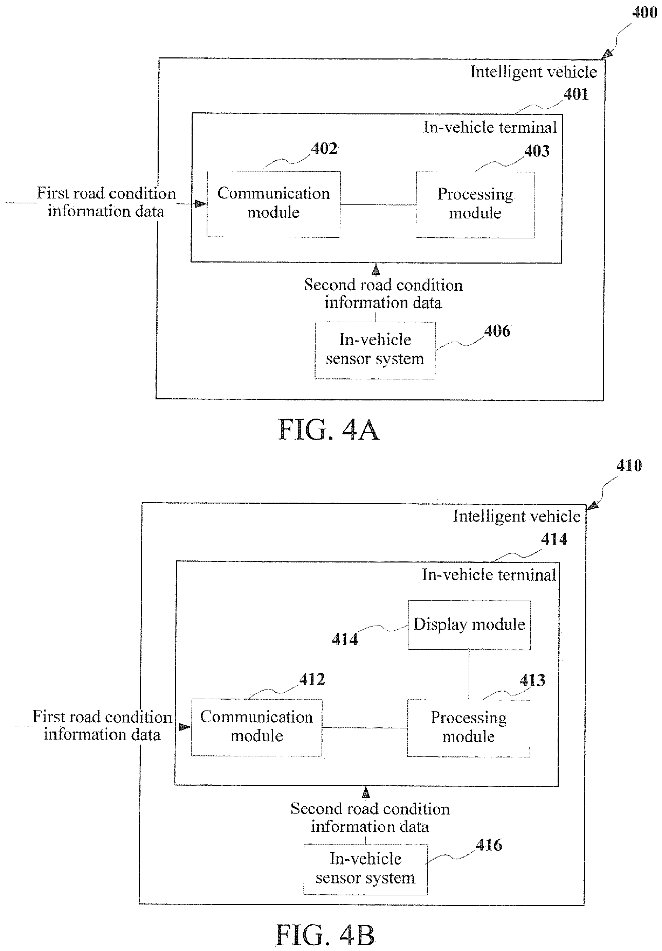

As shown in Fig. 4A, to implement the foregoing solution, in an embodiment, an intelligent vehicle 400 comprises an in-vehicle terminal 401 for communicating, and the in-vehicle terminal 401 comprises a communication module 402 and a processing module 403. Specifically, the in-vehicle terminal may be an in-vehicle computer and a processing chip that can provide computing and processing capabilities and that are disposed inside the vehicle, or a mobile terminal that can be in communication connection with an automobile and that can provide computing and processing capabilities.

The communication module 402 receives first road condition data from the intelligent lighting system, and acquires second road condition data collected by an in-vehicle sensor system 406. In an embodiment of the present invention, the communication module 402 comprises the foregoing radio frequency module, the WiFi module, the Zigbee module, or the like, and can directly establish communication connection with the lighting equipments 400 to acquire road condition data information collected by the lighting equipments.

The communication module 402 may be alternatively indirectly connected to the lighting equipments through another network. For example, the communication module 402 only comprises a GPRS module, the GPRS module is connected to a service terminal (for example, a base station of a mobile network operator or a server connected to a base station) through a mobile Internet network, and the service terminal may be connected in advance to the lighting equipments through a network, thereby establishing the indirect connection.

The processing module 403 is connected to the communication module 402, and is configured to: receive and fuse the first road condition data with the second road condition data to form complete road condition data for navigation and/or automatic driving, and generate a vehicle control instruction used for controlling automatic driving of the vehicle based on the road condition information data. In an embodiment of the present invention, the processing module 403 may be a computer system, comprising a processor (for example, a CPU, an MCU, a SOC and the like), a memory (a RAM and a ROM), or the like. The memory is configured to store a vehicle control instruction program, and the processor is configured to invoke the vehicle control instruction program from the memory to run the program to implement a function. The processing module 403 may fuse the first road condition data with the second road condition data by using, for example, a multi-sensor information fusion algorithm.

For fusion processing on the first road condition data and the second road condition data, for example, reference system coordinates corresponding to the first road condition data and the second road condition data may be unified, and coordinates based on united map information may be selected for use. For example, in the prior art, the intelligent vehicle 400 models the first road condition data and merges it into a map based on map information provided by a satellite positioning system, and then the communication system of the intelligent lighting system needs to correspondingly transmit coordinate information of the lighting equipments collecting corresponding data on a same map when directly transmitting the second road condition data. In this way, the intelligent vehicle 400 can use a same manner of processing the first road condition data to process the second road condition data and merge the second road condition data into the map. Overlapped parts are superimposed and corrected, and complete road condition information is obtained based on this and is further used for, for example, navigation and/or automatic driving. Certainly, the complete road condition information may also be sent to other devices through communication transmission, and so on.

As shown in Fig. 4B, an in-vehicle terminal 411 of an intelligent vehicle 410 further comprises a display module 414 in addition to a communication module 412 and a processing module 413, and the in-vehicle terminal 411 is connected to an in-vehicle sensor system 416; the display module 414 comprises, for example, a display screen and a related display circuit; the processing module 413 is connected to the display module 414, and is further configured to process the road condition information data into a graphics display format, for example, process the road condition information data into 2D or 3D modeling data and generate an image by using a graphic algorithm, thereby displaying the image on the display module 414 to navigate users. Preferably, the road condition information data may further be converted into audio data, and navigation information may be output by using an in-vehicle speaker device.

The solution of the present embodiment may also be applied to a common vehicle that is not an intelligent vehicle, an in-vehicle terminal on the common vehicle may display navigation information corresponding to the complete road condition information data, thereby providing users with more accurate navigation experience, and the solution is not limited to the intelligent vehicle.

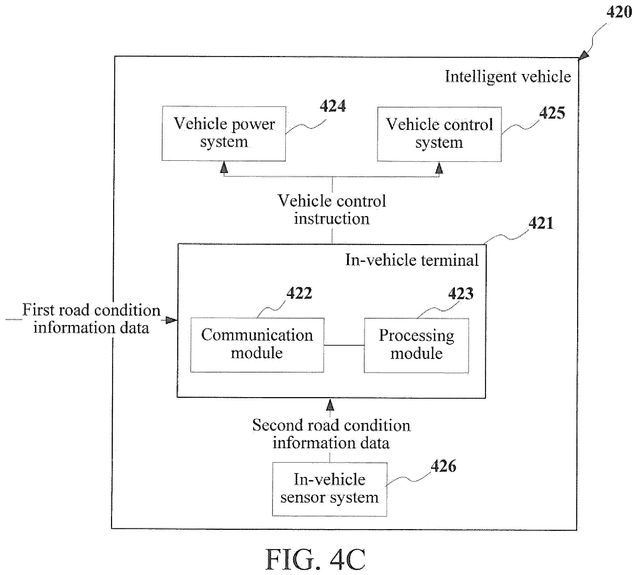

As shown in Fig. 4C, in the present embodiment, an intelligent vehicle 420 comprises an in-vehicle terminal 421 (comprising a communication module 422 and a processing module 423), a vehicle power system 424, and a vehicle control system 425, and the in-vehicle terminal 421 is in communication connection with the vehicle power system 424 and the vehicle control system 425.

A difference between the in-vehicle terminal 421 in this embodiment and the in-vehicle terminals 401 and 411 in the forgoing embodiments lies in that the processing module 423 is further configured to generate the vehicle control instruction based on the complete road condition data (the principle is like the foregoing description), and send the vehicle control instruction to the vehicle power system 424 and the vehicle control system 425, to control automatic driving of the vehicle. The vehicle control instruction is generated based on the complete road condition data. Therefore, compared with the prior art in which vehicle control is implemented based on only an in-vehicle sensor system 426 (comprising GPS), the vehicle control instruction is closer to an actual road condition, vehicle control is more accurate, and safety of automatic driving is greatly improved.

It should be noted that the "in-vehicle terminal" referred in the present invention may be an electrical terminal device fixedly disposed in the vehicle, or may be other mobile electrical devices such as a mobile phone, a tablet computer, or a notebook computer that is carried by a driver.

It should be noted that data collected by the sensing units cannot be directly applied to navigation and automatic driving of the intelligent vehicle. Therefore, in the foregoing embodiments, the processing module of the in-vehicle terminal needs to be used for data analysis and processing. In this way, a data computing and processing amount of the processing module of the in-vehicle terminal is increased to certain extent.

Therefore, in a preferred embodiment of this application, the intelligent lighting system may further comprise a preprocessing unit, configured to preprocess the collected road condition information data, and a part or all of a computing and analysis process is performed in the preprocessing unit of the intelligent lighting system in advance. Specifically, the preprocessing comprises one or more of defining of a collision boundary and/or a collision volume of a vehicle, a pedestrian or another obstacle on a road, determining of a motion state of the vehicle, the pedestrian or the another obstacle on the road, and 3D modeling of the vehicle, the pedestrian or the another obstacle on the road. For example, an actual volume corresponding to a proportion in an image of the vehicle is correspondingly analyzed by using image data collected by a camera, boundaries of a periphery of the vehicle is defined, and data association is performed on coordinates corresponding to the boundaries. In this way, the intelligent vehicle can directly learn of the data that is already analyzed and defined. When the same area is covered by the plurality of lighting equipments (for example, both sides of the road), by combining road condition information collected by different lighting equipments from different angles, the data can be determined in more details and more comprehensively.

In another embodiment, in the preprocessing step, 2D or 3D modeling is performed on road condition information collected by the sensing units, and coordinate data is associated. In this way, the intelligent vehicle can directly merge the data into a digital map formed based on the in-vehicle sensor and satellite positioning data. It may be understood that, the preprocessing process may only comprise some of steps of conversion from sensor data to data that can be directly applied by the processing module of the intelligent vehicle, and this can also reduce computing pressure of the processing module in the in-vehicle terminal of the intelligent vehicle. Allocation of specific steps may be performed based on a protocol between the intelligent lighting system and the in-vehicle terminal, and in a preferred embodiment, step allocation is performed based on computing capabilities that can be actually allocated of the intelligent lighting system and the in-vehicle terminal.

In an embodiment, the preprocessing unit may be implemented in the form of processor modules distributively disposed on the plurality of lighting equipments in the intelligent lighting system, and the processor modules preprocess (separate processing and/or fusion processing) the road condition data collected by the lighting equipments in an area. In another embodiment, the preprocessing unit may also be disposed at a cloud end, and the road condition data collected by the intelligent lighting system is transmitted to the cloud end for computing and then is fed back to network nodes of the intelligent lighting system in the corresponding area to perform external (the intelligent vehicle) data transmission.

Preprocessing the first road condition data and then transmitting the first road condition data to the intelligent vehicle can greatly reduce a computing and processing amount of the intelligent vehicle. If a plurality of intelligent vehicles are driven in a same road section, this advantage is more clearly shown. That is, a computing amount of the intelligent lighting system is not increased, and computing and processing amounts of the plurality of intelligent vehicles are reduced.

Further, for the intelligent lighting system, each lighting equipment is fixed at a fixed position on the road. Therefore, a background of each of the sensing units of the intelligent lighting system is also fixed. For example, for a camera device, a road and a landscape background within a range of the camera device are not changed or are slightly changed. During preprocessing on the road and landscape background by the preprocessing unit of the intelligent lighting system, a vehicle can be quite easily recognized by simply comparing with a preset background (an open road). Horizontal and vertical distances from a camera to a road are fixed, a scaling of image data, a collection angle and coordinate parameters of the lighting equipment on a map need only to be preset, and information such as vehicle boundaries, a distance between vehicles and specific lanes on the road can be accurately acquired through image recognition.

Further, a simulated model is established for the foregoing information according to a data standard of an intelligent vehicle. In this way, the preprocessed first road condition data can be directly merged into the road condition simulated model established by the intelligent vehicle. Similarly, when the same area on the road is covered by the plurality of lighting equipments, and when the preprocessing unit performs fusion processing on the road condition data collected by the plurality of lighting equipments, data superposition processing is performed on a same map coordinate system by only considering different coordinates of the lighting equipments on a map.

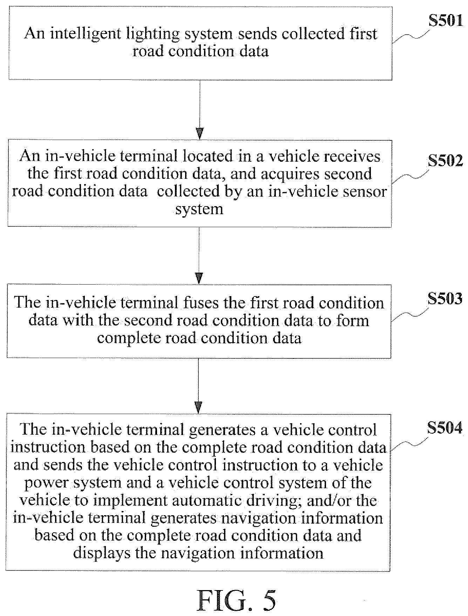

As shown in Fig. 5, based on the foregoing embodiments, the present invention can further provide an auxiliary vehicle driving method, comprising:
step S501: sending collected first road condition data by an intelligent lighting system;
step S502: receiving the first road condition data by an in-vehicle terminal located in a vehicle, and acquiring second road condition data collected by an in-vehicle sensor system;
step S503: fusing the first road condition data with the second road condition data to form complete road condition data by the in-vehicle terminal; and
step S504: generating a vehicle control instruction based on the complete road condition data and sending the vehicle control instruction to a vehicle power system and a vehicle control system of the vehicle to implement autonomous driving by the in-vehicle terminal; and/or generating navigation information based on the complete road condition data and displaying the navigation information by the in-vehicle terminal.

In conclusion, the present invention provides the intelligent lighting system, the intelligent vehicle, and the auxiliary vehicle driving system and method thereof. The intelligent lighting system communicates with the vehicle to transmit the road condition information data to the vehicle for navigation and/or automatic driving. In the technical solution of the present invention, the lighting equipments are used to collect the road condition information data to the vehicle, to resolve a problem that an intelligent vehicle sensor system has a "visual blind area", thereby greatly improving navigation accuracy and safety of the intelligent vehicle.

The present invention effectively overcomes various disadvantages in the prior art, and has a high industrial utilization value.

The foregoing embodiments merely exemplarily describe the principles and effects of the present invention, but are not intended to limit the present invention. Any person skilled in the art may modify or change the foregoing embodiments without departing from the spirit and scope of the present invention. Therefore, any equivalent modification or change made by any person of ordinary skill in the technical field without departing from the spirit and technical ideas disclosed in the present invention shall fall within the claims of the present invention.

## Claims

1. An intelligent lighting system, comprising:
a plurality of lighting equipments disposed along a road, wherein each of the plurality of lighting equipments is provided with a sensing unit, which is configured to collect road condition information data within a detection range of the sensing unit; and
a communication system, in communication connection with the sensing units, and configured to provide the collected road condition information data to a vehicle.

2. The intelligent lighting system as in claim 1, wherein detection ranges of the plurality of lighting equipments partially overlap with each other; and/or communication coverage ranges of the plurality of lighting equipments partially overlap with each other.

3. The intelligent lighting system as in claim 1, further comprising a preprocessing unit, configured to preprocess the road condition information data.

4. The intelligent lighting system as in claim 3, wherein the preprocessing unit comprises processing modules disposed on the plurality of lighting equipments, and the processing modules preprocess road condition data collected by the sensing units within an area.

5. The intelligent lighting system as in claim 3, wherein the preprocessing unit is disposed at a cloud end at which a network is connected to the communication system.

6. The intelligent lighting system as in claim 3-5, wherein a manner of the preprocessing comprises one or more of the following: defining of a collision boundary and/or a collision volume of a vehicle, a pedestrian or another obstacle; determining of a motion state of the vehicle, the pedestrian or the another obstacle; and 3D modeling of the vehicle, the pedestrian or the another obstacle.

7. The intelligent lighting system as in claim 1, wherein the communication system comprises a communication units disposed on the plurality of lighting equipments, and is in communication connection with the vehicle through an external communication network, or is in direct communication connection with the vehicle.

8. The intelligent lighting system as in claim 1, wherein the communication system is further in communication connection with a cloud end through an external network to upload the road condition information data.

9. A lighting equipment, configured to establish an intelligent lighting system, comprising a lighting unit, a sensing unit, and a communication unit, wherein
the sensing unit is configured to collect road condition information within a detection range of the sensing unit; and
the communication unit is configured to: form a communication system of a road lighting network, transmit road condition information data collected by a sensor out, and provide the road condition information data for a vehicle directly or through an external network.

10. A vehicle, comprising a processing module and a communication module, wherein
the communication module is configured to receive first road condition information data from an intelligent lighting system and second road condition information data from an in-vehicle sensor system, and the intelligent lighting system is disposed along a road, and is configured to collect and transmit road condition data; and
the processing module is connected to the communication module, and is configured to: process the first road condition information data and the second road condition information data to form complete road condition data, and generate a vehicle control instruction based on the complete road condition data; and/or generate navigation information for the vehicle to display based on the complete road condition data.

11. The vehicle as in claim 10, comprising an in-vehicle terminal, wherein the in-vehicle terminal comprises the processing module and the communication module.

12. The vehicle as in claim 11, wherein the in-vehicle terminal further comprises a display module; and the processing module is connected to the display module, and is further configured to process road condition information data into the navigation information and display the navigation information by using the display module.

13. An in-vehicle terminal, comprising:
a communication module, configured to receive first road condition information data from an intelligent lighting system and second road condition information data from an in-vehicle sensor system; and
a processing module, connected to the communication module, and configured to: process the first road condition information data and the second road condition information data to form complete road condition data, and generate a vehicle control instruction based on the complete road condition data; and/or the in-vehicle terminal generates navigation information based on the complete road condition data and displays the navigation information.

14. The in-vehicle terminal as in claim 13, wherein the in-vehicle terminal further comprises a display module; and the processing module is connected to the display module, and is further configured to process road condition information data into the navigation information and display the navigation information by using the display module.

15. An auxiliary vehicle driving system, comprising:
the intelligent lighting system as in any one of claims 1 to 8; and
the vehicle as in claims 10 to 12 or the in-vehicle terminal as in claim 13 or 14.

16. An auxiliary vehicle driving method, comprising:
sending collected first road condition data by an intelligent lighting system disposed along a road and configured to collect and transmit road condition data;
receiving the first road condition data by an in-vehicle terminal located in a vehicle, and acquiring second road condition data collected by an in-vehicle sensor system;
fusing the first road condition data with the second road condition data to form complete road condition data by the in-vehicle terminal; and
generating a vehicle control instruction based on the complete road condition data and sending the vehicle control instruction to the vehicle by the in-vehicle terminal; and/or generating navigation information based on the complete road condition data and displaying the navigation information by the in-vehicle terminal.

17. The auxiliary vehicle driving method as in claim 16, wherein the intelligent lighting system starts to collect road condition information data within a road section after it is monitored that the vehicle accesses a network or drives into a communication coverage area.

18. The auxiliary vehicle driving method as in claim 16, comprising: preprocessing, by the intelligent lighting system, road condition information data and sending the preprocessed road condition information data out by using a communication system.

19. The auxiliary vehicle driving method as in claim 18, wherein a manner of the preprocessing comprises one or more of the following: defining of a collision boundary and/or a collision volume of a vehicle, a pedestrian or another obstacle; determining of a motion state of the vehicle, the pedestrian or the another obstacle; and 3D modeling of the vehicle, the pedestrian or the another obstacle.
